# EUROPEAN PATENT APPLICATION

(11) **EP 3 789 094 A1**
(43) Date of publication of application: **10.03.2021**
(21) Application number: 20183720.0
(22) Date of filing: 02.07.2020
(51) Int. Cl.: A63H 13/00

(54) **ACTION ROBOT TOY**

(30) Priority: 03.09.2019 JP 2019160384
(71) Applicant: Tomy Company, Ltd., Katsushika-ku Tokyo 124-8511 (JP)
(72) Inventor: NAGASHIMA, Gen, Tokyo, 124-8511 (JP); ICHIKAWA, Keita, Tochigi City, Tochigi 328-0042 (JP)
(74) Representative: Dr. Gassner & Partner mbB

(57) **Abstract**

**[Problem]**

To provide an action robot toy that has a simple structure, and has abundant action modes.

**[Solution]**

Comprise: a robot body; two shafts arranged parallel to each other; two rotating members provided corresponding to each of the two shafts, for which a base end part is linked rotatably to the robot body via the corresponding shaft, a tip end part always projects from the robot body during rotation, and has a rotation area in which it is possible take the upper position and the lower position of the robot body; and two rotation devices provided corresponding to each of the two rotating members, wherein the two rotating members are configured to be rotatable within one plane orthogonal to the two shafts, and the configuration is such that the robot body is lifted by the reaction when both of the two rotating members touch the ground in the lower position.

## Description

### [Technical Field]

The present invention relates to an action robot toy.

### [Background Art]

From the past, as action robot toy that perform dancing, known are items that detect the movement of an operator, and link the movement of the operator to a toy to be operated (Patent Document 1).

### [Prior Art Documents]

### [Patent Documents]

[Patent Document 1] Unexamined Patent Publication No. 2002-210260
[Patent Document 2] Patent Publication No. 4397412

### [Summary of the Invention]

### [Problems the Invention Is Intended to Solve]

With this kind of action robot toy, though there is the interesting point of imitating people, the hands only move up and down, so there is the problem that the action mode is limited.

Also, as a robot toy, items are known for which not only the hands but also the legs are moved (Patent Document 2). With these items that move hands and legs, though there is an increase in action modes, a movement mechanism for moving the hands and legs is required, so there was the problem that the structure is complicated, and naturally becomes expensive.

The present invention was created considering these problems, and the purpose is to provide an action robot toy that has a simple structure, and has abundant action modes.

### [Means for Solving the Problems]

A first means comprises:
a robot body,
two shafts arranged parallel to each other on the robot body,
two rotating members provided corresponding to each of the two shafts, for which a base end part is linked rotatably to the robot body via the corresponding shaft, a tip end part always projects from the robot body during rotation, and there is a rotation area for which, when seen in the basic posture with the plane including the two shafts in parallel to the ground plane, the tip end part can take the upper position and the lower position of the robot body,
two rotation devices provided corresponding to each of the two rotating members, that rotate the corresponding rotating member within the rotation area, and
a control device that controls the operation of the two rotation devices, the action robot toy characterized in that
the two rotating members are configured to be rotatable within one plane orthogonal to the two shafts, and the configuration is such that the robot body is lifted by the reaction when both of the two rotating members touch the ground in the lower position.

The second means is the first means, characterized by being configured so that when the tip end parts of both of the two rotating members are in the upper position of the robot body, the tip end parts of the two rotating members can abut each other.

The third means is the first means or the second means, characterized in that the robot body is a spherical body, and the two shafts are provided at equal distance from the center of the robot body.

The fourth means is the third means, characterized in that on the robot body, a body rotating device that rotates the robot body is provided,
the body rotating device comprises
a rotary plate that is attached to a rotating shaft extending vertically through the center of the spherical body, with rubber attached to the part that projects from the bottom surface of the robot body and that touches ground on the ground plane,
a motor that is attached to the robot body, and
a power transmission mechanism that is attached to the robot body, and that transmits power of the motor to the rotary plate, wherein
the control device rotates the robot body using the body rotating device.

The fifth means is any of the first to fourth means, characterized in that provided on the outside of the robot body is a projecting piece that holds the robot body so that the plane including the two shafts is approximately parallel to the ground plane.

The sixth means is any of the first to fifth means, comprising
an operation setting means for a player to set the movement of the two rotating members, and
a storage unit that stores in operation data form the movement set using the operation setting means, and characterized in that
the control device controls the operation of the two rotation devices based on the operation data stored in the storage unit.

The seventh means is the sixth means, characterized in that each of the two rotation devices is configured from a servo mechanism including a rotation position detection unit, and the operation setting means sets the movement of the two rotating members using the rotation position detection unit by the player actually moving the two rotating members in a desired form.

The eighth means is the sixth means or the seventh means, comprising
a sound output unit, and characterized in that
music data is stored in the storage unit, and
the control device controls the operation of the two rotation devices while outputting music from the sound output unit based on the music data stored in the storage unit.

The ninth means is any of the first means to the eighth means, characterized in that each of the two rotating members comprises a first rotating piece positioned at the side of the base end part, and a second rotating piece positioned at the side of the tip end part, attached to the first rotating piece via a joint to be rotatable, and each of the two rotation devices comprises a first rotation device that rotates the first rotating piece, and a second rotation device that rotates the second rotating piece.

The tenth means is the ninth means, characterized in that each of the first rotation device and the second rotation device is configured from a servo mechanism that includes a rotation position detection unit, and the operation setting means sets the movement of the two rotating members using the rotation position detection unit by the player actually moving the first rotating piece and the second rotating piece in a desired form.

The eleventh means is the ninth means or the tenth means, characterized in that in a state with the first rotating piece of one of the rotating members touching ground, and the second rotating piece of the one rotating member tucked under the robot body, when the first rotating piece of the other rotating member is positioned above the robot body, and the second rotating piece of the other rotating member covers above the robot body, due to fluctuation in the gravity center position, the robot body rolls in the direction in which the tips of the two second rotating pieces face.

### [Effect of the Invention]

With the first means, the two rotating members are rotated vertically, and when rotated downward, this is recognized as a leg touching ground, and when upward, this is recognized as a hand. In this way, each rotating member becomes a leg or a hand, so the structure is simple. Also, when the rotating member is positioned downward, it is possible to lift up the robot body, so it is possible to realize a novel action robot toy.

With the second means, the configuration is such that the tip end parts abut each other when the tip end parts of the two rotating members rise simultaneously, so it is possible to exude an image like hands clapping above the head.

With the third means, the robot body is a spherical body, so it is possible to play even if upside down.

With the fourth means, using a projecting piece, the plane including two shafts is parallel to the ground plane, so it is possible to have stable action.

With the fifth means, the robot body itself is configured to rotate, so it is possible to increase the variations in action.

With the sixth means, it is possible for the player to be involved in the movement of the action robot toy, so it is possible to realize a highly interesting action robot toy.

With the seventh means, it is possible to set the movement by actually moving the two rotating members in a desired form, so it is possible to perform settings intuitively.

With the eighth means, it is possible to have the action robot toy perform action together with music, so it is possible to realize a more highly interesting action robot toy.

With the ninth means, since each rotating member is configured from the first rotating piece and the second rotating piece, compared to a case of being configured by a single member, it is possible to have more delicate and complex action.

With the tenth means, it is possible for the player to be involved in the movement of the action robot toy, so it is possible to realize a more highly interesting action robot toy.

With the eleventh means, it is possible to have the robot body roll by having the first rotating piece and the second rotating piece be in a prescribed position, so it is possible to increase the variation in actions.

### [Brief Description of the Drawings]

FIG. 1 is a front side perspective view of an action robot toy of an embodiment seen from diagonally above.
FIG. 2 is a rear side perspective view of the action robot toy of the embodiment seen from diagonally below.
FIG. 3 is a front side perspective view of the action robot toy in a state with the front body outer shell of the robot body removed seen from diagonally above.
FIG. 4 is a rear side perspective view of the action robot toy in a state with the rear body outer shell of the robot body removed seen from diagonally above.
FIG. 5 is a perspective view showing a movement mechanism of the action robot toy.
FIG. 6 is a drawing showing the basic posture during dancing.
FIG. 7 is a block diagram showing a control configuration of the action robot toy.
FIG. 8 is a perspective view showing a dedicated controller.

### [Modes for Carrying Out the Invention]

Following, an embodiment of an action robot toy of the present invention is explained based on drawings.

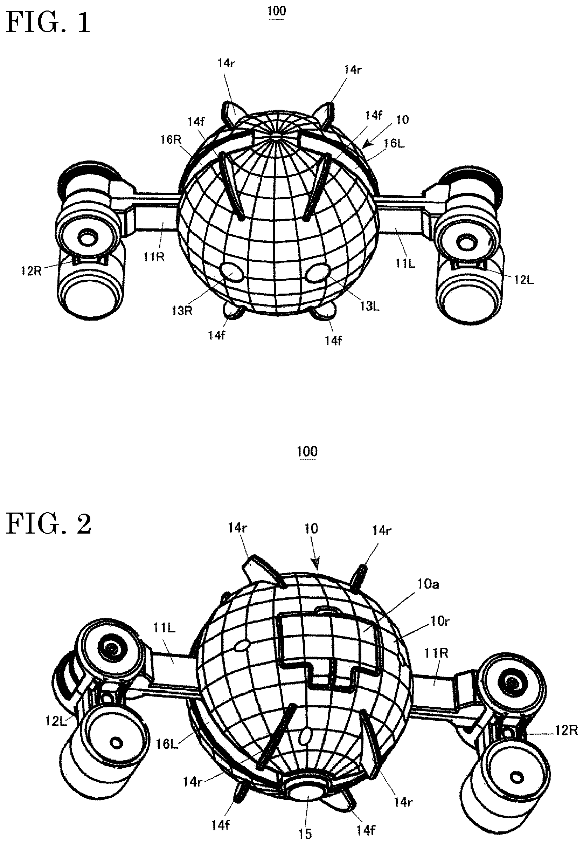

FIG. 1 is a front side perspective view of an action robot toy 100 of the embodiment seen from diagonally above, and FIG. 2 is a rear side perspective view of the action robot toy 100 seen from diagonally below.

The action robot toy 100 of the present embodiment comprises a spherical robot body 10. A first rotating piece 11L is provided at the left side of the robot body 10, and a first rotating piece 11R is provided at the right side. Left and right means left and right when viewing from the action robot toy 100.

Each first rotating piece 11 (when not distinguishing between the left and right first rotating pieces 11L, 11R, these are called the first rotating pieces 11) rotates vertically independently. Also, a second rotating piece 12L is provided at the tip of the left first rotating piece 11L, and a second rotating piece 12R is provided at the tip of the right first rotating piece 11R. Each second rotating piece 12 (when not distinguishing between the left and right second rotating pieces 12L, 12R, these are called the second rotating pieces 12) rotates vertically independently. A rotating member is configured by this first rotating piece 11 and second rotating piece 12.

A left eye 13L and a right eye 13R are displayed on the front surface of the robot body 10. Also, two each of projecting pieces 14f, 14r are provided on the upper part of the robot body 10, and two each of projecting pieces 14f, 14r are provided on the lower part.

A circular rubber plate 15 is exposed at the lower end of the robot body 10, and the robot body 10 is able to rotate with the rubber plate 15 as the center.

This action robot toy 100 performs prescribed actions using combinations of rotating the left and right first rotating pieces 11L, 11R, rotating the left and right second rotating pieces 12L, 12R, and rotating the robot body 10.

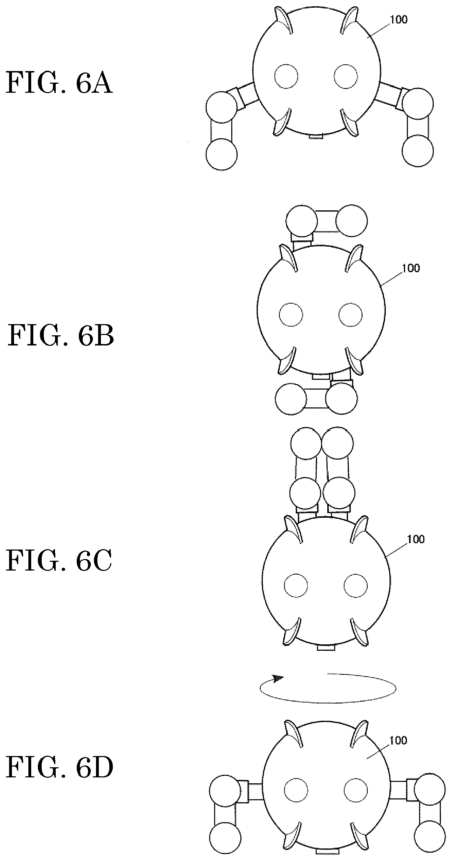

FIG. 6 (A) to (D) show characteristic forms of the first rotating pieces 11 and the second rotating pieces 12 that can be taken by the action robot toy 100.

FIG. 6 (A) shows a posture in which the first rotating pieces 11L, 11R extend diagonally downward with respect to the robot body 10, and the second rotating pieces 12L, 12R are hanging. In this posture, the tips of the second rotating pieces 12L, 12R are touching ground, and the robot body 10 is rising up from the ground plane. The rotating member can hold this state.

FIG. 6 (B) shows the first rotating piece 11L extending below the robot body 10, and the second rotating piece 12L tucked below the robot body 10. Meanwhile, the form is such that the first rotating piece 11R extends above the robot body 10, and the second rotating piece 12R covers the upper end of the robot body 10. When in this form, by center of gravity movement, the action robot toy 100 rolls in the direction in which the tips of the second rotating pieces 12L, 12R face.

In FIG. 6 (C), the form is such that both of the first rotating pieces 11L, 11R extend upward with respect to the robot body 10, and the tip end parts of the second rotating pieces 12L, 12R abut each other.

In FIG. 6 (D), the first rotating pieces 11L, 11R extend horizontally with respect to the robot body 10, and the second rotating pieces 12L, 12R are in a hanging form. With this form, for example, the state is such that rotation is possible by the robot body 10 with the rubber plate 15 as the center.

Following, the detailed configuration of the action robot toy 100 is explained.

### (Robot Body 10)

A recess 16L in a cut-through state that pierces vertically is formed at the left side of the robot body 10, and a recess 16R in a cut-through state that pierces vertically is formed at the right side. The base end part of the corresponding first rotating piece 11 is inserted in each recess 16 (when not distinguishing between the left and right recesses 16L, 16R, these are called the recesses 16), and is axially supported within the recess 16. Also, as shown in FIG. 2, a portion of a rear body outer shell 10r configures a swing door 10a that can be opened and closed by a hinge (not illustrated).

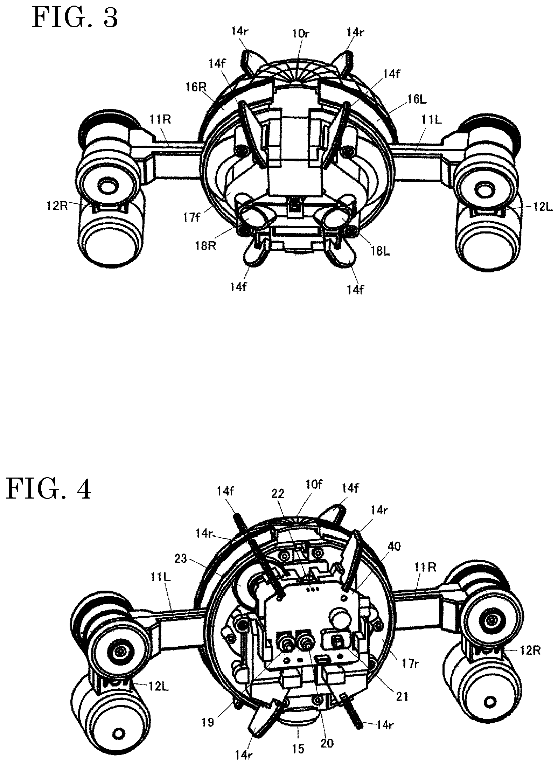

FIG. 3 is a front side perspective view of the action robot toy 100 in a state with the front body outer shell 10f removed seen from diagonally above.

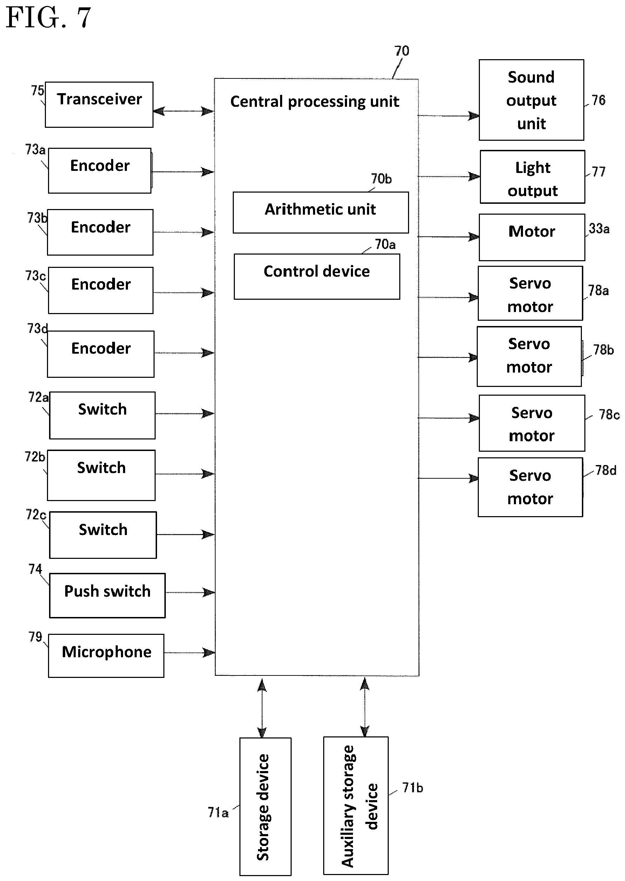

A front side mounted body 17f is provided on the front half of the robot body 10. A tubular cover 18L is provided at the left side and a tubular cover 18R is provided on the right side on this front side mounted body 17f. One each of a light emitting diode (not illustrated) configuring a portion of a light output unit 77 (see FIG. 7) is installed in the interior of each tubular cover 18 (when not distinguishing between the left and right tubular covers 18L, 18R, these are called tubular covers 18). Also, two each of projecting pieces 14f are provided at the top and bottom of the front side mounted body 17f. Each projecting piece 14f projects piercing the front body outer shell 10f.

FIG. 4 is a rear side perspective view of the action robot toy 100 in a state with the rear body outer shell 10r removed seen from diagonally above.

A rear side mounted body 17r is provided on the rear half of the robot body 10. A partition plate 40 such as a board is attached to this rear side mounted body 17r. Provided on the partition plate 40 are buttons 19, 20 and a knob 21 for operating a corresponding switch, and a charging terminal 22. The buttons 19, 20, the knob 21, and the charging terminal 22 are exposed when the swing door 10a is opened. A battery (not illustrated) that is charged through the charging terminal 22 is provided on the rear side of the partition plate 40.

Also, a speaker 23 is attached to the rear side mounted body 17r. Furthermore, two each of the projecting pieces 14r are provided at the top and bottom of the rear side mounted body 17r. Each projecting piece 14r projects piercing the rear body outer shell 10r. Each of the four projecting pieces 14f and projecting pieces 14r are for stabilizing the orientation of the action robot toy 100.

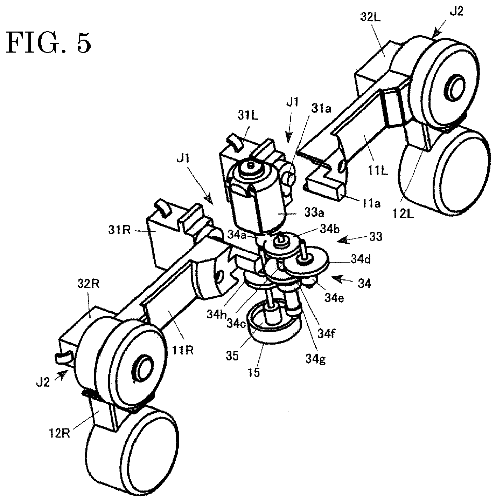

FIG. 5 is a perspective view showing an operating device of the action robot toy 100. With this drawing, the rear side half of the rotating member is removed.

The action robot toy 100 comprises: a left first rotating piece rotation device 31L for rotating the left first rotating piece 11L; a right first rotating piece rotation device 31R for rotating the right first rotating piece 11R; a left second rotating piece rotation device 32L for rotating the left second rotating piece 12L; and a right second rotating piece rotation device 32R for rotating the right second rotating piece 12R. The left first rotating piece rotation device 31L, the right first rotating piece rotation device 31R, the left second rotating piece rotation device 32L, and the right second rotating piece rotation device 32R are respectively configured from individual servo mechanisms. Each servo mechanism comprises a servo motor, and an encoder that measures the rotation position using a sensor and outputs position information as an electrical signal. It is also possible to use a rotation position detection unit such as a potentiometer instead of the encoder. Here, the rotation position detection unit, in addition to being used for position control of the first rotating pieces 11 and the second rotating pieces 12, can also be used to detect the position of the first rotating pieces 11 and the second rotating pieces 12 and register the movement of the action robot toy 100.

The left first rotating piece rotation device 31L and the right first rotating piece rotation device 31R are provided on a joint J1 inside the robot body 10. Meanwhile, the left second rotating piece rotation device 32L and the right second rotating piece rotation device 32R are provided on a joint J2.

Also, a body rotating device 33 for rotating the robot body 10 is provided in the center of the robot body 10. This body rotating device 33 comprises a motor 33a installed vertically, and a gear mechanism 34 linked to the motor 33a. With this body rotating device 33, the motor power is transmitted to a rotary plate 35 via gears 34a, 34b, 34c, 34d, 34e, 34f, 34g, and 34h. The rubber plate 15 is adhered to the bottom surface of the rotary plate 35. Also, when the motor 33a is operated, the rotary plate 35 tries to rotate, but the rubber plate 15 is gripping the play surface (ground plane), so without the rubber plate 15 rotating, the motor 33a and thus the robot body 10 rotate by reaction.

### (First Rotating Piece 11 and Second Rotating Piece 12)

The joint J1 of the robot body 10 and the first rotating piece 11 is formed by linking an output shaft 31a of the first rotating piece rotation device 31 and a rotating shaft 11a of the first rotating piece 11.

Also, the joint J2 of the first rotating piece 11 and the second rotating piece 12 is a cylindrical shape having a center axis extending at a right angle to the rotation plane of the second rotating piece 12. This allows for smooth sliding on the ground plane with rotation.

Also, the tip end part of the second rotating piece 12 also has a cylindrical shape having a center axis extending at a right angle to the rotation plane of the second rotating piece 12. This allows for smooth sliding on the ground plane with rotation.

### (Control Configuration)

FIG. 7 shows the control configuration of the action robot toy 100.

The action robot toy 100 comprises as the control configuration a central processing unit 70, a main storage device 71a, and an auxiliary storage device 71b.

The central processing unit 70 comprises a control device 70a and an arithmetic unit 70b.

Prescribed programs and various data are stored in the auxiliary storage device 71b. As programs, a setting registration and playback program, etc. are stored. As data, data needed for executing each program, a plurality of music data, and operation data, etc., are stored. Music data and operation data stored in advance are associated 1 to 1. This associated music data and operation data are used during a demonstration mode, and it is possible to make the action robot toy 100 do an action (dancing) suited to the music. Also, as operation data, a plurality of templates are prepared. The templates are used during free dance mode. Music data and operation data can also be additionally stored in the auxiliary storage device 71b.

The central processing unit 70 reads the programs and various data as appropriate and executes control and calculation. The main storage device 71a is a part that becomes a work area, and programs and various data are temporarily stored as needed.

Also, the action robot toy 100 comprises: a switch 72a operated by the knob 21; switches 72b, 72c operated by the buttons 19, 20; encoders 73a to 73d included in the servo mechanism; and a push switch 74 placed on the head of the action robot toy 100. The switch 72a is a power switch, and switches 72b, 72c are variable definition type switches. Specifically, the switches 72b, 72c function as a determination button, a selection button, a reset button, etc., according to the program being executed. The push switch 74 is used to set and register the movement of the robot body 10.

Also, the action robot toy 100 comprises: a transceiver 75; a sound output unit 76; the light output unit 77; the motor 33a; servo motors 78a to 78d included in each rotation device; and a microphone 79. The transceiver 75 performs communication with a dedicated controller, or a smart phone or tablet using Bluetooth (registered trademark), etc. The light output unit 77 is configured including the light emitting diode, and the sound output unit 76 is configured including the speaker 23. The microphone 79 is an item for picking up external sound.

### (How to Play, and Action)

Four modes of how to play with this action robot toy 100 are prepared. Each mode is explained hereafter. Selection of the mode is performed by operating the selection button or the determination button.

### 1. Free Dance Mode

This free dance mode is a mode in which the action robot toy 100 performs free dancing to music.

With this free dance mode, as music, it is possible to use music output from a smart phone, etc., for example. Of course, it is also possible to use music based on music data stored in the auxiliary storage device 71b of the action robot toy 100.

With this free dance mode, when music plays, a template is selected from among the operation data stored in the auxiliary storage device 71b, the first rotating piece 11 and the second rotating piece 12 are moved based on that template, and the action robot toy 100 performs free dancing.

In this case, with the first rotating piece 11 and the second rotating piece 12, it is possible to select one template, and to repeat movement based on that one template until the music ends, and also possible to have the first rotating piece 11 and the second rotating piece 12 move while exchanging the templates until the music ends, having the action robot toy 100 perform free dancing.

### 2. Control Mode

This control mode is a mode that moves the action robot toy 100 in real time by the player operating an outside controller. At this time as well, it is preferable to play music the same as when in the free dance mode.

With this control mode, as the outside controller, it is possible to use a dedicated controller 90, or a smart phone 92 or a tablet.

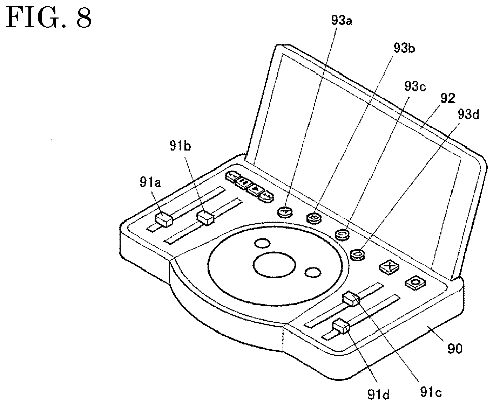

An example of the dedicated controller 90 is shown in FIG. 8. In the same drawing, code 92 shows a smart phone for playing music.

When using this dedicated controller 90, sliding knobs 91a to 91d having 1 to 1 correspondence for each of the first rotating piece 11 and the second rotating piece 12 are operated forward and back as appropriate. Having done that, an operation signal corresponding to the operation direction and the operation amount is transmitted to the action robot toy 100 from the dedicated controller 90, and at the action robot toy 100 that received that operating signal, the corresponding first rotating piece 11 and the second rotating piece 12 are moved according to the operating direction and operation amount of the knobs 91a to 91d. In this case, for sending and receiving of signals, for example, Bluetooth which is a short-range communication standard is used, so pairing is required before sending and receiving.

Meanwhile, when using the smart phone 92 or a tablet instead of the dedicated controller 90, when an operation application is installed in advance in the smart phone 92 or the tablet, an operation screen is displayed on the screen by that operation application, and a prescribed operation can be performed on that operation screen.

### 3. Program Mode

With this program mode, the player programs and sets and registers the movement of the action robot toy 100 in advance, and the action robot toy 100 is made to perform that set and registered movement. At this time as well, it is preferable to play music in the same manner as when in the free dance mode.

As a method for setting and registering in this case, though not particularly limited, there are roughly two methods that are possible.

The first method is a method of setting and registering directly to the action robot toy 100. In this case, the setting and registration is performed according to voice guidance output from the sound output unit 76.

In specific terms, the first rotating piece 11 and the second rotating piece 12 of the action robot toy 100 are actually moved until the desired form is reached, and when the desired form of the first rotating piece 11 and the second rotating piece 12 is reached, the push switch 74 is pressed via the head. By doing this, one form of the action robot toy 100 is registered as data. By performing this kind of operation a plurality of times, the movements of the action robot toy 100 are registered in the form of operation data in the auxiliary storage device 71b. When there is a wish to input rotation of the robot body 10 midway, for example, it is possible to press the head of the action robot toy 100, or to press the button 19, etc., without operating the first rotating piece 11 and the second rotating piece 12, and also preferable to make it so that selection of the playback speed of the movement by the action robot toy 100 can be done by operating a specific button.

The second method is a method of using the dedicated controller 90 or a smart phone or a tablet to do setting and registering.

When using the dedicated controller 90, the first rotating piece 11 and the second rotating piece 12 of the action robot toy 100 are actually moved until a desired form is reached, and a first button (determination button) 93a is pressed when the first rotating piece 11 and the second rotating piece 12 reach the desired form. By doing this, one form of the action robot toy 100 is registered as data. This operation is performed a plurality of times, and by pressing the second button to fourth button (determination buttons) 93b to 93d in order, the determination signals are successively transmitted to the action robot toy 100, and the movement of the action robot toy 100 is registered in the form of operation data in the auxiliary storage device 71b. When there is a desire to input rotation of the robot body 10 midway, for example, the head of the action robot toy 100 is pressed. Having done that, the push switch 74 is operated, and the rotation of the robot body 10 is set and registered. In this case, when the head of the action robot toy 100 is pressed once, the action robot toy 100 is rotated in one direction by half a circumference midway in dancing, and when the head is pressed twice, the action robot toy 100 may be rotated by one full circumference in one direction midway in dancing. Also, instead of pressing the head of the action robot toy 100, by operating a specific button of the dedicated controller 90, rotation of the robot body 10 is set, small round trip rotation is set, or alternatively, it is also possible to set rotation in the reverse direction. It is preferable to make it possible to select the playback speed of the movement by the action robot toy 100 by operating a specific button.

Meanwhile, when doing setting and registering using the smart phone 92 or the tablet, a registration application is installed in advance in the smart phone 90 or the tablet, and a registration screen is displayed on the screen using that registration application. A plurality of sample images of the form of the first rotating piece 11 and the second rotating piece 12 are displayed on this registration screen, for example. Also, a plurality of modes of the rotation of the robot body 10 are displayed. Therefore, the player selects the form of the first rotating piece 11 and the second rotating piece 12 or the mode of the rotation of the robot body 10 from among the sample images on the screen. By performing this a plurality of times, the movement of the action robot toy 100 is set. Also, the results of that setting are transmitted to the action robot toy 100. By doing this, the movement of the action robot toy 100 is set and registered.

With this program mode, the first rotating piece 11 and the second rotating piece 12 are moved in order of setting and registration based on the set and registered motion data. In this case as well, it is preferable to make it possible to set the playback speed on the screen.

### 4. Demonstration Mode

This demonstration mode has the action robot toy 100 perform movement using operation data that has been associated with music data.

With this demonstration mode, together with playback of music, the action robot toy 100 performs movement suited to that.

Above, we explained an embodiment of the present invention, but the present invention is not limited to the abovementioned embodiment, and it goes without saying that various modifications are possible.

For example, with the abovementioned embodiment, a case of attaching the second rotating pieces 12 on the tip end parts of the first rotating pieces 11 was explained, but it is also possible to have only the first rotating pieces 11. This is because with only the first rotating pieces 11 as well, the rotation range is broad, and being able to raise up the robot body 10 gives an element of surprise, making it is possible to provide an interesting action robot toy 100.

Also, with the abovementioned embodiment, the player was able to set the rotation of the robot body 10, but it is also possible to have rotation of the robot body 10 performed when the first rotating pieces 11 and the second rotating pieces 12 are in a prescribed form, and also possible to have rotation of the robot body 10 performed irregularly.

Also, with the abovementioned embodiment, the form of both the first rotating pieces 11 and the second rotating pieces 12 was set and registered, but it is also possible to set and register only the form of the first rotating pieces 11, and to have the second rotating pieces 12 do automatic reciprocating rotation when the first rotating pieces 11 are in a prescribed form.

### [Explanation of Codes]

- 11: First rotating piece
- 12: Second rotating piece
- 31L: Left first rotating piece rotation device
- 31R: Right first rotating piece rotation device
- 32L: Left second rotating piece rotation device
- 32R: Right second rotating piece rotation device
- 33: Body rotating device
- 33a: Motor
- 34: Gear mechanism
- 70: Central processing unit
- 70a: Control device
- 70b: Arithmetic unit
- 71a: Storage device
- 71b: Auxiliary storage device
- 72a: Switch
- 72b: Switch
- 72c: Switch
- 73a: Encoder
- 73b: Encoder
- 73c: Encoder
- 73d: Encoder
- 74: Push switch
- 75: Transceiver
- 76: Sound output unit
- 77: Light output unit
- 78a: Servo motor
- 78b: Servo motor
- 78c: Servo motor
- 78d: Servo motor
- 79: Microphone
- 100: Action robot toy

## Claims

1. An action robot toy, comprising:
a robot body,
two shafts arranged parallel to each other on the robot body,
two rotating members provided corresponding to each of the two shafts, for which a base end part is linked rotatably to the robot body via the corresponding shaft, a tip end part always projects from the robot body during rotation, and there is a rotation area for which, when seen in the basic posture with the plane including the two shafts in parallel to the ground plane, the tip end part can take the upper position and the lower position of the robot body,
two rotation devices provided corresponding to each of the two rotating members, that rotate the corresponding rotating member within the rotation area, and
a control device that controls the operation of the two rotation devices, the action robot toy **characterized in that**
the two rotating members are configured to be rotatable within one plane orthogonal to the two shafts, and the configuration is such that the robot body is lifted by the reaction when both of the two rotating members touch the ground in the lower position.

2. The action robot toy of claim 1, **characterized by** being configured so that when the tip end parts of both of the two rotating members are in the upper position of the robot body, the tip end parts of the two rotating members can abut each other.

3. The action robot toy of claim 1 or claim 2, **characterized in that** the robot body is a spherical body, and the two shafts are provided at equal distance from the center of the robot body.

4. The action robot toy of claim 3, **characterized in that** on the robot body, a body rotating device that rotates the robot body is provided,
the body rotating device comprises
a rotary plate that is attached to a rotating shaft extending vertically through the center of the spherical body, with rubber attached to the part that projects from the bottom surface of the robot body and that touches ground on the ground plane,
a motor that is attached to the robot body, and
a power transmission mechanism that is attached to the robot body, and that transmits power of the motor to the rotary plate, wherein
the control device rotates the robot body using the body rotating device.

5. The action robot toy of any of claims 1 to 4, **characterized in that** provided on the outside of the robot body is a projecting piece that holds the robot body so that the plane including the two shafts is approximately parallel to the ground plane.

6. The action robot toy of any of claims 1 to 5, comprising
an operation setting means for a player to set the movement of the two rotating members, and
a storage unit that stores in operation data form the movement set using the operation setting means, and **characterized in that**
the control device controls the operation of the two rotation devices based on the operation data stored in the storage unit.

7. The action robot toy of claim 6, **characterized in that** each of the two rotation devices is configured from a servo mechanism including a rotation position detection unit, and the operation setting means sets the movement of the two rotating members using the rotation position detection unit by the player actually moving the two rotating members in a desired form.

8. The action robot toy of claim 6 or claim 7, comprising
a sound output unit, and **characterized in that**
music data is stored in the storage unit, and
the control device controls the operation of the two rotation devices while outputting music from the sound output unit based on the music data stored in the storage unit.

9. The action robot toy of any of claims 1 to 8, **characterized in that** each of the two rotating members comprises a first rotating piece positioned at the side of the base end part, and a second rotating piece positioned at the side of the tip end part, attached to the first rotating piece via a joint to be rotatable, and each of the two rotation devices comprises a first rotation device that rotates the first rotating piece, and a second rotation device that rotates the second rotating piece.

10. The action robot toy of claim 9, **characterized in that** each of the first rotation device and the second rotation device is configured from a servo mechanism that includes a rotation position detection unit, and the operation setting means sets the movement of the two rotating members using the rotation position detection unit by the player actually moving the first rotating piece and the second rotating piece in a desired form.

11. The action robot toy of claim 9 or claim 10, **characterized in that** in a state with the first rotating piece of one of the rotating members touching ground, and the second rotating piece of the one rotating member tucked under the robot body, when the first rotating piece of the other rotating member is positioned above the robot body, and the second rotating piece of the other rotating member covers above the robot body, due to fluctuation in the gravity center position, the robot body rolls in the direction in which the tips of the two second rotating pieces face.
